# EUROPÄISCHE PATENTSCHRIFT

(11) **EP 3 333 116 B1**
(45) Veröffentlichungstag und Bekanntmachung des Hinweises auf die Patenterteilung: **05.02.2020**
(21) Anmeldenummer: 17205166.6
(22) Anmeldetag: 04.12.2017
(51) Int. Cl.: B66F 9/06, B66F 9/075, G05D 1/02

(54) **VERFAHREN ZUR AUTOMATISCHEN AUSRICHTUNG EINES FLURFÖRDERZEUGS IN EINEM WARENLAGER SOWIE SYSTEM AUS EINEM FLURFÖRDERZEUG UND EINEM WARENLAGER**
METHOD FOR AUTOMATIC ALIGNMENT OF AN INDUSTRIAL TRUCK IN A WAREHOUSE AND SYSTEM CONSISTING OF AN INDUSTRIAL TRUCK AND A WAREHOUSE
PROCÉDÉ D'ALIGNEMENT AUTOMATIQUE D'UN CHARIOT DE MANUTENTION DANS UN ENTREPÔT AINSI QUE SYSTÈME COMPORTANT UN CHARIOT DE MANUTENTION ET UN ENTREPÔT

(30) Priorität: 06.12.2016 DE 102016123542
(43) Veröffentlichungstag der Anmeldung: 13.06.2018
(73) Patentinhaber: Jungheinrich Aktiengesellschaft, 22047 Hamburg (DE)
(72) Erfinder: Göpner, Oliver, 23845 Oering (DE)
(74) Vertreter: Hauck Patentanwaltspartnerschaft mbB

(56) Entgegenhaltungen:
- EP-A1- 2 851 331
- EP-B1- 2 468 678
- US-A1- 2003 044 047

## Beschreibung

Die Erfindung betrifft ein Verfahren zur automatischen Ausrichtung eines Flurförderzeugs, insbesondere eines Kommissionierfahrzeugs, in einem Warenlager. Weiterhin betrifft die Erfindung ein System aus einem Flurförderzeug, insbesondere einem Kommissionierfahrzeug, und einem Warenlager.

Flurförderzeuge müssen zur korrekten Aufnahme wie Abgabe von zu transportierenden Waren innerhalb eines Warenlagers ausgerichtet werden. So werden beispielsweise Kommissionierfahrzeuge innerhalb eines Regalgangs eines Warenlagers in der Nähe eines Lagerplatzes positioniert, von dem Materialien entnommen werden sollen. Das Kommissionierfahrzeug wird also auf einer Seite des Regalgangs positioniert. Dies ermöglicht dem Bediener einen möglichst kurzen Transportweg von dem Lagerplatz zu dem Kommissionierfahrzeug. Heutzutage erfolgt eine derartige Seitenorientierung eines Kommissionierfahrzeugs innerhalb des Regalgangs im Wesentlichen manuell. So ist es beispielsweise bekannt, dass der Bediener das Flurförderzeug über eine am Flurförderzeug vorgesehene Bedieneinheit oder eine Fernbedienung an die entsprechende Regalseite heranfährt. Auch sind halbautomatische Vorgänge bekannt, bei denen der Bediener durch einen Knopfdruck vorgibt, ob sich das Flurförderzeug beispielsweise rechts oder links am Regal orientieren soll und das Flurförderzeug anschließend selbstständig an die entsprechende Regalseite heranfährt. Auch ist es möglich, dass sich das Flurförderzeug automatisch an der Regalseite orientiert, an welche es (manuell) durch den Bediener herangefahren wurde. Die beschriebenen Verfahren erfordern also stets zusätzliche Eingaben durch eine Bedienperson zur Vorgabe einer Seitenorientierung.

Aus EP 2 851 331 B1 ist ein Verfahren zur Steuerung eines Flurförderzeugs bekannt, bei dem das Flurförderzeug einen optischen Sensor mit einem Überwachungsbereich aufweist, wobei der optische Sensor mit einer Steuerungsvorrichtung verbunden ist, die die Position einer Person innerhalb eines für den optischen Sensor vorgegebenen Überwachungsbereich bestimmt und das Flurförderzeug der Person nachführt. Hierfür sind innerhalb des Überwachungsbereichs Überwachungsgrenzen vorgegeben, deren Überschreitung durch eine Person von einer Steuervorrichtung überwacht wird. Wird ein Überschreiten einer Überwachungsgrenze festgestellt, so wird ein Fahrantrieb des Flurförderzeugs angesteuert, um das Fahrzeug vorwärts zu bewegen bis sich die Person wieder auf der ursprünglichen Seite der Überwachungsgrenze befindet. Auf diese Weise wird das Fahrzeug der Person nachgeführt.

Aus EP 2 500 871 A1 ist ein Verfahren zur Integration eines autonomen Flurförderzeugs in ein Anlagenverwaltungssystem bekannt. Das Flurförderzeug verfügt über ein Navigationssystem sowie über eine Vielzahl weiterer Sensoren, deren Daten kabellos an das Anlagenverwaltungssystem übertragen werden. Über das Anlagenverwaltungssystem kann eine Bedienperson mit dem Flurförderzeug interagieren und dieses somit fernsteuern. Sollte das Flurförderzeug arbeitsunfähig werden, beispielsweise aufgrund eines Hindernisses in seinem Fahrweg, so wird das Ereignis dem Anlagenverwaltungssystem mitgeteilt, woraufhin eine Bedienperson in das Fahrverhalten des Flurförderzeugs eingreifen kann.

Aus EP 2 392 538 A2 ist ein Horizontalkommissionierer bekannt, der ein Bedienelement umfasst, dessen Betätigung den Horizontalkommissionierer selbstständig um eine Wegstrecke verfährt, die einen Abstand zwischen einem Bedienstand des Horizontalkommissionierers und einem Kommissionierbehälter entspricht. Somit können die Wege der Bedienperson zwischen Aufnahmepunkt und Kommissionierbehälter eingespart werden.

Der Erfindung liegt die Aufgabe zugrunde, die Bewegung eines Flurförderzeugs in einem Warenlager weiter zu vereinfachen, insbesondere weiter zu automatisieren.

Die Aufgabe wird gelöst durch ein Verfahren gemäß Anspruch 1 sowie durch ein System gemäß Anspruch 10. Vorteilhafte Ausgestaltungen sind Teil der Unteransprüche, der Beschreibung sowie der Figuren.

Das erfindungsgemäße Verfahren zur automatischen Ausrichtung eines Flurförderzeugs in einem Warenlager umfasst die Schritte:
- Bestimmen einer relativen Position einer Bedienperson gegenüber einem Flurförderzeug durch eine Ortungseinheit des Flurförderzeugs,
- Ausrichten des Flurförderzeugs in einer vorbestimmten Seitenorientierung gegenüber einem in Antriebsrichtung des Flurförderzeugs auf der linken Seite des Flurförderzeugs befindlichen Objekt, wenn die bestimmte relative Position der Bedienperson auf der linken Seite des Flurförderzeugs liegt, und
- Ausrichten des Flurförderzeugs in einer vorbestimmten Seitenorientierung gegenüber einem in Antriebsrichtung des Flurförderzeugs auf der rechten Seite des Flurförderzeugs befindlichen Objekt, wenn die bestimmte relative Position der Bedienperson auf der rechten Seite des Flurförderzeugs liegt.

Gemäß dem erfindungsgemäßen System aus einem Flurförderzeug und einem Warenlager ist
- eine Ortungseinheit des Flurförderzeugs dazu ausgebildet, eine relative Position der Bedienperson gegenüber dem Flurförderzeug zu bestimmen,
- eine Steuereinheit dazu ausgebildet, das Flurförderzeug gegenüber einem in Antriebsrichtung auf der linken Seite des Flurförderzeugs befindlichen Objekt in einer vorbestimmten Seitenorientierung auszurichten, wenn die bestimmte relative Position der Bedienperson auf der linken Seite des Flurförderzeugs liegt und das Flurförderzeug gegenüber einem in Antriebsrichtung auf der rechten Seite des Flurförderzeugs befindlichen Objekt in einer vorbestimmten Seitenorientierung auszurichten, wenn die bestimmte relative Position der Bedienperson auf der rechten Seite des Flurförderzeugs liegt.

Erfindungsgemäß wird also zunächst die relative Position der Bedienperson in Bezug auf das Flurförderzeug bestimmt. Die dazu verwendete Ortungseinheit des Flurförderzeugs kann beispielsweise mindestens drei Sende- und Empfangseinheiten umfassen, die ein fahrzeugfestes Koordinatensystem aufspannen. Die mindestens drei Sende- und Empfangseinheiten können dazu ausgebildet sein, Signale auszusenden, die von der Bedienperson, insbesondere durch eine von der Bedienperson getragene Funkfernbedienung, beantwortet werden. Anhand der Signallaufzeiten dieser Signale kann eine Entfernung der Bedienperson zu jeder der mindestens drei Sende- und Empfangseinheiten bestimmt werden. Hieraus kann, beispielsweise mittels Triangulation oder Trilateration, die Position der Bedienperson in dem fahrzeugfesten Koordinatensystem und somit die relative Position der Bedienperson gegenüber dem Flurförderzeug ermittelt werden.

Abhängig von der bestimmten relativen Position der Bedienperson gegenüber dem Flurförderzeug erfolgt dann eine Ausrichtung des Flurförderzeugs. Diese Ausrichtung erfolgt automatisch. Das Flurförderzeug richtet sich dabei an einem Objekt aus, das sich auf der gleichen Fahrzeugseite befindet, wie die Bedienperson. Sollte die Ortungseinheit die relative Position der Bedienperson als auf der linken Seite des Flurförderzeugs liegend bestimmen, so richtet sich das Flurförderzeug an einem auf der linken Seite befindlichen Objekt aus. Sollte die Ortungseinheit die relative Position der Bedienperson als auf der rechten Seite des Flurförderzeugs liegend bestimmen, so richtet sich das Flurförderzeug gegenüber einem auf der rechten Seite liegenden Objekt aus. Die Ausrichtung erfolgt dabei über eine Steuereinheit des Flurförderzeugs. Insbesondere kann die Steuereinheit entsprechend der gewünschten Ausrichtung des Flurförderzeugs Steuerbefehle an einen Fahrantrieb und/oder eine Lenkung des Flurförderzeugs übermitteln. Die Seitenangaben "links" und "rechts" sind im Rahmen dieser Anmeldung stets auf die Antriebsrichtung des Flurförderzeugs bezogen, sofern nichts anderes angegeben ist.

Das erfindungsgemäße Verfahren bzw. System erlaubt somit eine Ausrichtung des Flurförderzeugs zu einem Objekt in Abhängigkeit von einer ermittelten Position der Bedienperson. Das Flurförderzeug richtet sich dabei automatisch an einem Objekt aus, das sich auf der Seite der Bedienperson befindet. Bei diesem Objekt kann es sich beispielsweise um eine Wand oder um ein Regal handeln. Durch die erfindungsgemäße automatische Ausrichtung ist keine manuelle Eingabe durch eine Bedienperson zur Vorgabe einer Seitenorientierung mehr nötig.

Nach einer bevorzugten Ausgestaltung sind die Objekte Regalseiten eines Regalgangs des Warenlagers. Es kann somit also eine Ausrichtung des Flurförderzeugs gegenüber einer linken oder rechten Regalseite erfolgen. Das Warenlager kann hierbei mehrere Regale mit dazwischen liegenden Regalgängen umfassen, wobei jeder Regalgang zwei Regalseiten aufweist. In Bezug auf eine Antriebsrichtung eines durch den Regalgang fahrenden Flurförderzeugs verfügt der Regalgang somit über eine linke und eine rechte Regalseite. Befindet sich die Person beispielsweise in der Nähe einer in Antriebsrichtung des Flurförderzeugs gesehen linken Regalseite, so kann das Flurförderzeug an diese linke Regalseite heranfahren und sich seitlich zu dieser Regalseite orientieren. Die Person kann dann besonders einfach Ware aus dem entsprechenden Regal auf das Flurförderzeug transportieren, also einen Kommissioniervorgang durchführen. Wechselt die Person auf die andere Seite des Flurförderzeugs, so kann entsprechend eine Ausrichtung des Flurförderzeugs gegenüber einer in Antriebsrichtung des Flurförderzeugs rechten Regalseite erfolgen. Das Flurförderzeug kann sich dabei über eine entsprechende Ansteuerung seines Fahrantriebs bzw. seiner Lenkung geradeaus wie auch seitlich bewegen, um eine gewünschte Seitenorientierung gegenüber einer Regalseite zu erreichen. Die Orientierung des Flurförderzeugs erfolgt derart, dass die kommissionierende Person besonders einfach und effizient Waren aus dem Regal auf das Flurförderzeug, insbesondere auf ein Lastteil des Flurförderzeugs, befördern kann.

Nach einer weiteren Ausgestaltung erfolgt das Ausrichten des Flurförderzeugs in der vorbestimmten Seitenorientierung gegenüber der linken Regalseite, indem das Flurförderzeug in einem definierten Abstand zu der linken Regalseite positioniert wird und/oder es erfolgt das Ausrichten des Flurförderzeugs in der vorbestimmten Seitenorientierung gegenüber der rechten Regalseite, indem das Flurförderzeug in einem definierten Abstand zu der rechten Regalseite positioniert wird. Die Steuereinheit ist dazu ausgebildet, das Flurförderzeug entsprechend zu positionieren. Das Flurförderzeug kann sich also abhängig von der ermittelten Position der Bedienperson automatisch in einem vorbestimmten Abstand zu der entsprechenden Regalseite positionieren. Das ausgerichtete Flurförderzeug kann dabei mit seiner Antriebsrichtung in einem Winkel zu der jeweiligen Regalseite stehen. Auch kann sich das Flurförderzeug in Antriebsrichtung parallel zu der Regalseite ausrichten. Der vorbestimmte Abstand ist dabei bevorzugt so gewählt, dass die zwischen Flurförderzeug und Regal befindliche Person in besonders einfacher und effizienter Weise Waren aus dem Regal auf das Flurförderzeug transportieren kann. Beispielsweise kann das Flurförderzeug derart positioniert sein, dass die Person keine weiteren Schritte gehen, sondern sich nur um ihre eigene Achse drehen muss, um Waren aus dem Regal auf das Flurförderzeug zu kommissionieren. Dies ist besonders effizient.

Nach einer weiteren Ausgestaltung wird das Flurförderzeug an einem in Antriebsrichtung auf der linken Seite des Flurförderzeugs befindlichen Objekt ausgerichtet, wenn der Abstand der relativen Position der Bedienperson zu einer fahrzeugfesten Bezugsachse einen vorbestimmten ersten Abstandswert überschreitet und an einem in Antriebsrichtung auf der rechten Seite des Flurförderzeugs befindlichen Objekt ausgerichtet, wenn der Abstand der relativen Position der Bedienperson zu der fahrzeugfesten Bezugsachse einen vorbestimmten zweiten Abstandswert überschreitet. Die Steuereinheit des Flurförderzeugs ist entsprechend ausgebildet, das Flurförderzeug in einem definierten Abstand zu der linken bzw. rechten Regalseite zu positionieren. Der erste Abstandswert kann einen Abstand von dem Flurförderzeug aus nach links definieren während der zweite Abstandswert einen Abstand vom Flurförderzeug aus nach rechts definieren kann. Die fahrzeugfeste Bezugsachse kann beispielsweise eine Mittellängsachse des Flurförderzeugs sein. Die Abstandswerte können in der Steuerung des Flurförderzeugs gespeichert sein. Die Steuerungseinheit des Flurförderzeugs kann dabei kontinuierlich oder in Intervallen den aus der relativen Position der Bedienperson ermittelten Abstandswert mit den gespeicherten Abstandswerten vergleichen. Entfernt sich die Bedienperson so weit von dem Flurförderzeug, dass der erste Abstandswert überschritten wird, so erfolgt eine Ausrichtung des Flurförderzeugs an einem auf der linken Seite befindlichen Objekt. Entfernt sich die Bedienperson derart von dem Flurförderzeug, dass der zweite Abstandswert überschritten wird, so erfolgt eine Ausrichtung des Flurförderzeugs an einem auf der rechten Seite befindlichen Objekt. Ein automatisches Ausrichten des Flurförderzeugs an einem Objekt erfolgt somit erst, wenn der entsprechende Abstandswert überschritten ist. Der erste Abstandswert kann dabei einen ersten, sich über die linke Fahrzeugseite erstreckenden Raumbereich definieren, während der zweite Abstandswert einen zweiten, sich über die rechte Fahrzeugseite erstreckenden Raumbereich definieren kann. Die Abstandswerte können als positive oder negative Werte auf einer zu der fahrzeugfesten Bezugsachse senkrechten Abstandsachse definiert sein. Durch eine Definition derartiger Abstandswerte kann erreicht werden, dass das Flurförderzeug sich nur dann ausrichtet, wenn sich die Bedienperson in einer gewissen Mindestentfernung von dem Flurförderzeug befindet. Beispielsweise kann so verhindert werden, dass eine automatische Ausrichtung erfolgt, wenn die Bedienperson sich auf dem Flurförderzeug oder sehr nah an dem Flurförderzeug befindet, beispielsweise um Waren aufzunehmen oder abzulegen.

Auch kann ein dritter Abstandswert definiert werden, der größer als der erste Abstandswert ist und einen dritten, sich über die linke Fahrzeugseite erstreckenden Raumbereich definiert sowie ein vierter Abstandswert definiert werden, der größer als der zweite Abstandswert ist und einen vierten, sich über die rechte Fahrzeugseite erstreckenden Raumbereich definiert. Hierbei kann vorgesehen sein, dass kein Ausrichten des Flurförderzeugs erfolgt, wenn die relative Position der Bedienperson sich in einem Abstand von der fahrzeugfesten Bezugsachse befindet, der größer als der zweite bzw. vierte Abstandswert ist. So kann beidseitig der fahrzeugfesten Bezugsachse ein durch jeweils zwei Abstandswerte begrenzter dritter bzw. vierter Raumbereich definiert werden, wobei eine Ausrichtung des Flurförderzeugs nur dann erfolgt, wenn die relative Position einer Bedienperson innerhalb eines dieser Raumbereiche liegt. Insbesondere kann die in Antriebsrichtung linke Seite des Flurförderzeugs durch den dritten Raumbereich definiert sein und die in Antriebsrichtung rechte Seite des Flurförderzeugs durch den vierten Raumbereich definiert sein. Sollte sich eine Person so nah an dem Flurförderzeug oder so weit entfernt von dem Flurförderzeug befinden, dass ihre bestimmte relative Position außerhalb des dritten bzw. vierten Raumbereichs liegt, so erfolgt keine automatische Ausrichtung des Flurförderzeugs. Es kann somit beispielsweise verhindert werden, dass das Flurförderzeug seine Ausrichtung auch bei großer Entfernung der Bedienperson oder aufgrund der Anwesenheit dritter Personen ändert.

Nach einer weiteren Ausgestaltung bewegt sich das Flurförderzeug in Antriebsrichtung ohne eine Seitenorientierung, wenn der Abstand der relativen Position der Bedienperson zu der fahrzeugfesten Bezugsachse zwischen dem ersten Abstandswert und dem zweiten Abstandswert liegt. Somit wird ein weiterer Raumbereich definiert, innerhalb dessen die Anwesenheit einer Bedienperson eine Vorwärtsbewegung ohne Seitenorientierung des Flurförderzeugs zur Folge hat.

Dieser Raumbereich kann dabei insbesondere innerhalb des Flurförderzeugs, beispielsweise im Bereich einer Standplattform des Flurförderzeugs, liegen. Somit kann eine automatische Vorwärtsbewegung des Flurförderzeugs erfolgen, wenn eine Bedienperson sich beispielsweise auf dem Flurförderzeug befindet. Auch kann dieser weitere Raumbereich nah an einer Außenkontur des Flurförderzeugs, beispielsweise im Bereich von 0 mm bis 500 mm Abstand zu der Außenkontur, definiert werden. Es kann somit eine automatische Vorwärtsbewegung des Flurförderzeugs erfolgen, wenn sich eine Bedienperson nah an der Außenkontur des Flurförderzeugs befindet. Das Flurförderzeug kann sich somit neben der Bedienperson her bewegen.

Nach einer weiteren Ausgestaltung wird die relative Position der Bedienperson gegenüber dem Flurförderzeug durch mindestens einen Laserscanner, mindestens eine 3D-Kamera bzw. durch eine Funkortung bestimmt. Zur Bestimmung der relativen Position der Bedienperson mittels Funkortung können insbesondere mindestens drei Sende- und Empfangseinheiten vorgesehen sein, wie bereits erläutert.

Sollten mindestens drei Sende- und Empfangseinheiten vorgesehen sein, so kann die die relative Position der Bedienperson gegenüber dem Flurförderzeug nach einer weiteren Ausgestaltung durch die folgenden Schritte bestimmt werden: Aussenden von Suchsignalen durch mindestens drei Sende- und Empfangseinheiten des Flurförderzeugs, Empfangen und Verarbeitung der Suchsignale durch eine Funkfernbedienung, Aussenden von zu den Suchsignalen korrespondierenden Antwortsignalen durch die Funkfernbedienung, Ermitteln von Signallaufzeiten der ausgesandten Suchsignale und der empfangenen, korrespondierenden Antwortsignale durch eine Auswerteeinheit des Flurförderzeugs, Bestimmen der relativen Position einer die Funkfernbedienung tragenden Bedienperson durch Bestimmung der relativen Position der Funkfernbedienung gegenüber dem Flurförderzeug. Das entsprechende System kann dabei auch eine Funkfernbedienung umfassen. Als Teil der Ortungseinheit sind hierbei mindestens drei Sende- und Empfangseinheiten in einer vorbestimmten räumlichen Anordnung zueinander an dem Flurförderzeug angeordnet. Zudem ist kann als Teil der Ortungseinheit bzw. der Steuereinheit zum Ermitteln der Signallaufzeiten und zum Bestimmen der Position der Funkfernbedienung eine Auswerteeinheit vorgesehen sein.

Gemäß dieser Ausgestaltung wird also nicht direkt die relative Position der Bedienperson gegenüber dem Flurförderzeug bestimmt, sondern stattdessen die relative Position einer Funkfernbedienung gegenüber dem Flurförderzeug. Die Bedienperson kann dabei die Funkfernbedienung bei sich tragen. Jede der mindestens drei Sende- und Empfangseinheiten des Flurförderzeugs kann jeweils ein Suchsignal aussenden, das von der Funkfernbedienung empfangen und verarbeitet wird. Jedes der Suchsignale kann dabei eine die jeweilige Sende- und Empfangseinheit identifizierende Kennzeichnung tragen. Die Funkfernbedienung verarbeitet die jeweiligen Suchsignale, indem sie korrespondierende Antwortsignale erzeugt. Auch das jeweilige Antwortsignal kann eine die jeweilige Funkfernbedienung identifizierende Kennzeichnung enthalten. Zudem kann das jeweilige Antwortsignal eine Kennzeichnung enthalten, die eine eindeutige Zuordnung zu der Sende- und Empfangseinheit ermöglicht, die das korrespondierende Suchsignal abgeschickt hat. Die Funkfernbedienung kann beispielsweise als ein tragbares Handgerät oder auch als ein Handschuh ausgebildet sein. Die zurückgesandten Antwortsignale werden durch die jeweilige Sende- und Empfangseinheit empfangen und die jeweiligen Signallaufzeiten durch die Auswerteeinheit ermittelt. Hierbei kann auch eine interne Verarbeitungszeit der Funkfernbedienung zur Verarbeitung der Suchsignale berücksichtigt werden. Es werden somit mindestens drei Signallaufzeiten ermittelt. Aus diesen ermittelten Signallaufzeiten bestimmt die Auswerteeinheit mittels rechnerischer Verfahren, wie beispielsweise der Trilateration, die Entfernung jeder der mindestens drei Sende- und Empfangseinheiten zu der Funkfernbedienung. Hieraus folgt die Position der Funkfernbedienung relativ zu dem Flurförderzeug. Diese Methode der Positionsbestimmung ist besonders exakt und zuverlässig.

Die Erfindung wird im Folgenden anhand von Figuren erläutert. Sofern nichts anderes angegeben ist, bezeichnen gleiche Bezugszeichen dabei gleiche Gegenstände. Es zeigen:
- Fig. 1: ein Flurförderzeug in einer Ansicht von oben,
- Fig. 2: das Flurförderzeug aus Fig. 1 in einem Warenlager mitsamt einer Bedienperson und
- Fig. 3: ein Schema einer Ausgestaltung des erfindungsgemäßen Verfahrens.

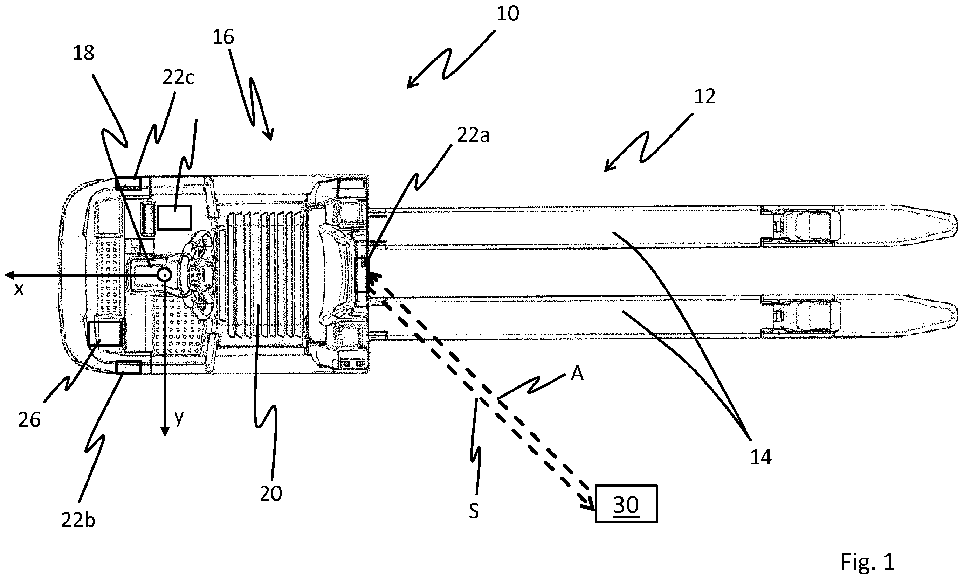

In Figur 1 ist ein Flurförderzeug 10 in einer Ansicht von oben dargestellt, wobei das Flurförderzeug 10 einen Lastteil 12 mit zwei Lastgabeln 14 zur Aufnahme von Paletten zum Kommissionieren von Waren umfasst. Zudem umfasst das Flurförderzeug 10 einen Antriebsteil 16 mit einer Kurzdeichsel 18 sowie einer Standplattform 20. Eine auf der Standplattform 20 stehende Bedienperson kann übe die Kurzdeichsel 18 das Flurförderzeug 10 führen. An dem Antriebsteil 16 sind als Teil der Ortungseinheit drei Sende- und Empfangseinheiten 22a, 22b, 22c angeordnet, deren Positionen in einem fahrzeugfesten Koordinatensystem definiert sind. Das fahrzeugfeste Koordinatensystem wird dabei durch drei senkrecht zueinander stehende Achsen X, Y und Z aufgespannt, wobei die Z-Achse in Fig. 1 in die Ebene hineinragt. Die Positionen der drei Sende- und Empfangseinheiten 22a, 22b, 22c können in der Steuereinheit 24 des Flurförderzeugs 10 gespeichert sein. Weiterhin ist in Fig. 1 eine schematisch dargestellte Funkfernbedienung 30 erkennbar. Das Flurförderzeug verfügt zudem über einen Fahrantrieb/eine Lenkung 26, die über die Steuereinheit 24 ansteuerbar sind.

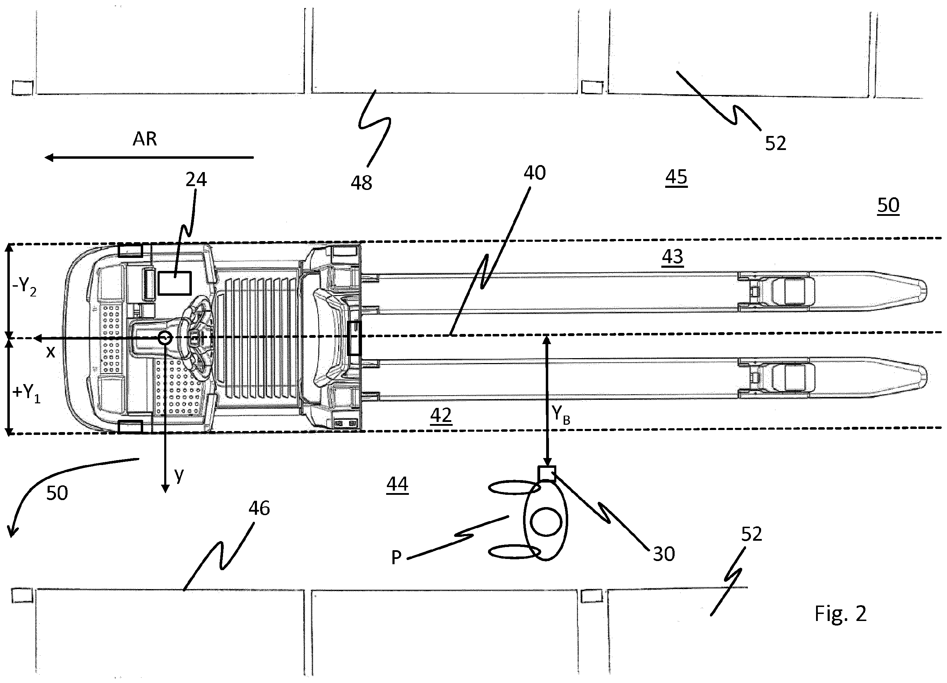

Die drei Sende- und Empfangseinheiten 22a, 22b, 22c senden Suchsignale aus, die von der Funkfernbedienung 30 empfangen und verarbeitet werden. Die Funkfernbedienung 30 sendet daraufhin korrespondierende Antwortsignale aus, die wiederum von den jeweiligen Sende- und Empfangseinheiten empfangen werden. In Fig. 1 ist aus Gründen der Übersichtlichkeit nur ein von der Sende- und Empfangseinheit 22a an die Funkfernbedienung 30 ausgesandtes Suchsignal S und ein von dieser Funkfernbedienung 30 an die Sende- und Empfangseinheit 22a zurückgesandtes Antwortsignal A dargestellt. Aus den Hin- und Rücklaufzeiten der jeweiligen Such- und Antwortsignale kann die Steuereinheit 24 des Flurförderzeugs 10 als Auswerteeinheit die Entfernung der Funkfernbedienung zu jeder der Sende- und Empfangseinheiten ermitteln und somit die Position der Funkfernbedienung 30 an dem fahrzeugfesten Koordinatensystem bestimmen. Grundsätzlich kann die Auswerteeinheit auch Teil der Ortungseinheit sein. Weiterhin ist in der Steuereinheit 24 eine fahrzeugfeste Bezugsachse 40 hinterlegt, die sich entlang der X-Achse erstreckt, wie in Fig. 2 ersichtlich.

Figur 2 zeigt das Flurförderzeug aus Figur 1 in einem Regalgang 50, der sich zwischen zwei Regalen 52 erstreckt. Eine Antriebsrichtung AR des Flurförderzeugs erstreckt sich entlang der X-Achse. Die folgenden Seitenangaben beziehen sich auf diese Richtung. Ausgehend von der fahrzeugfesten Bezugsachse 40 sind zwei Abstandswerte Y₁ und Y₂ definiert. Der erste Abstandswert Y₁ ist dabei als ein positiver Wert auf der Y-Achse definiert während der zweite Abstandswert Y₂ als ein negativer Wert auf der Y-Achse definiert ist. Zwischen der fahrzeugfesten Bezugsachse 40 und dem ersten Abstandswert Y₁ wird somit ein erster Raumbereich 42 aufgespannt, während durch die fahrzeugfeste Bezugsachse 40 und den zweiten Abstandswert Y₂ und zweiter Raumbereich 43 aufgespannt wird. Außerhalb des ersten Raumbereichs 42, d.h. bei Abstandswerten größer als der erste Abstandswert Y₁, erstreckt sich ein dritter Raumbereich 44 bis zu einem nicht dargestellten dritten Abstandswert. Außerhalb des zweiten Raumbereichs 43, d.h. bei betragsmäßig größeren Abstandswerten als der zweite Abstandswert Y₂, erstreckt sich ein vierter Raumbereich 45 bis zu einem nicht dargestellten vierten Abstandswert. Der dritte Abstandswert ist dabei, wie der erste Abstandswert, als ein positiver Wert entlang der Y-Achse definiert, während der vierte Abstandswert, wie der zweite Abstandswert, entlang der Y-Achse in negativer Richtung definiert ist. Dritter und vierter Abstandswert können sich beispielsweise bis in das jeweilige Regal hinein erstrecken. Innerhalb des dritten Raumbereichs 44 befindet sich eine Bedienperson P, die eine Funkfernbedienung 30 trägt. Diese Funkfernbedienung 30 befindet sich somit in einer Entfernung Y_{B} gegenüber der fahrzeugfesten Bezugsachse 40, die größer ist als der positiv definierte erste Abstandswert Y₁. Da sich die relative Position der Bedienperson somit auf der linken Seite des Flurförderzeugs befindet, erfolgt eine Ausrichtung des Flurförderzeugs gegenüber der linken Regalseite 46. Das Flurförderzeug 10 richtet sich hierbei gegenüber der linken Regalseite 46 aus, indem es eine vorbestimmte Seitenorientierung zu dieser Regalseite annimmt, also sich in einem definierten Abstand zu der Regalseite 46 in möglichst paralleler Weise positioniert. Über die Steuereinheit 24 erfolgt dabei ein Steuerbefehl an einen Fahrantrieb/eine Lenkung 26 des Flurförderzeugs 10 derart, dass sich das Flurförderzeug 10 in etwa entlang der Linie 50 nach vorn und zur linken Seite bewegt.

Das ausgerichtete Flurförderzeug befindet sich somit in einer optimalen Kommissionierposition, die es der Bedienperson erlaubt, möglichst einfach und effizient Waren aus dem linksseitigen Regal zu entnehmen und auf den Lastgabeln 12 des Flurförderzeugs 10 zu positionieren. Natürlich kann sich die Bedienperson mitsamt der Funkfernbedienung 30 auch in dem Raumbereich 45 befinden, wobei dann der Abstand der Bedienperson P bzw. der Funkfernbedienung 30 von der fahrzeugfesten Bezugsachse 40 kleiner als der negativ definierte zweite Abstandswert Y₂ ist. Betragsmäßig überscheitet der Abstand der relativen Position der Bedienperson zu der fahrzeugfesten Bezugsachse dabei natürlich den zweiten Abstandswert Y₂. Entsprechend würde dann eine Ausrichtung des Flurförderzeugs an der rechten Regalseite 48 erfolgen.

Sollte sich die Bedienperson mitsamt der Funkfernbedienung 30 innerhalb des Raumbereichs 42 oder innerhalb des Raumbereichs 43 befinden, so bewegt sich das Flurförderzeug in Antriebsrichtung AR ohne eine Seitenorientierung durchzuführen. Der Abstandswert Y_{B} der Funkfernbedienung liegt dann zwischen dem positiv definierten ersten Abstandswert Y₁ und dem negativ definierten zweiten Abstandswert Y₂. Es kann somit beispielsweise erreicht werden, dass sich das Flurförderzeug 10 in Antriebsrichtung AR bewegt, wenn die Bedienperson samt der Funkfernbedienung 30 auf die Standplattform 20 steigt. Grundsätzlich können der erste und zweite Abstandswert Y₁, Y₂ auch mit demselben (positiven oder negativen) Wert belegt werden. Somit wäre eine Seitenwahl immer aktiv. Sollten die Raumbereiche 42, 43 derart definiert werden, dass sie sich über eine Außenkontur des Flurförderzeugs hinaus erstrecken, beispielsweise um bis zu 500 mm, so kann das Flurförderzeug einer automatisch neben einer Bedienperson herfahren.

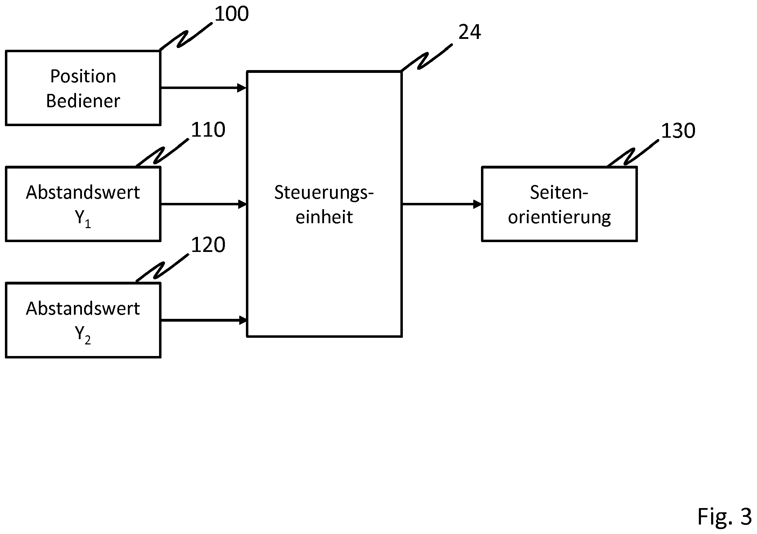

In Fig. 3 ist schematisch dargestellt, welche Informationen in die Steuerungseinheit eingehen, bevor diese eine Seitenorientierung auslöst. Die Steuerungseinheit berücksichtigt dabei, wie erläutert, die Position des Bedieners ("Position Bediener", Schritt 100) sowie den Abstandswert Y₁ ("Abstandswert Y₁", Schritt 110) und den Abstandswert Y₂ ("Abstandswert Y₂", Schritt 120). Auf Grundlage dieser Informationen richtet die Steuereinheit das Flurförderzeug in der oben beschriebenen Weise aus ("Seitenorientierung", Schritt 130).

## Patentansprüche

1. Verfahren zur automatischen Ausrichtung eines Flurförderzeugs in einem Warenlager mit den Schritten:
- Bestimmen einer relativen Position einer Bedienperson (P) gegenüber einem Flurförderzeug (10) durch eine Ortungseinheit (22a, 22b, 22c) des Flurförderzeugs (10),
- Ausrichten des Flurförderzeugs (10) in einer vorbestimmten Seitenorientierung gegenüber einem in Antriebsrichtung des Flurförderzeugs (10) auf der linken Seite des Flurförderzeugs (10) befindlichen Objekt (46), wenn die bestimmte relative Position der Bedienperson (P) auf der linken Seite des Flurförderzeugs (10) liegt, und
- Ausrichten des Flurförderzeugs (10) in einer vorbestimmten Seitenorientierung gegenüber einem in Antriebsrichtung (AR) des Flurförderzeugs (10) auf der rechten Seite des Flurförderzeugs (10) befindlichen Objekt (48), wenn die bestimmte relative Position der Bedienperson (P) auf der rechten Seite des Flurförderzeugs (10) liegt.

2. Verfahren nach Anspruch 1, **dadurch gekennzeichnet, dass** die Objekte Regalseiten (46, 48) eines Regalgangs (52) des Warenlagers sind.

3. Verfahren nach Anspruch 2, **dadurch gekennzeichnet, dass** das Ausrichten des Flurförderzeugs (10) in der vorbestimmten Seitenorientierung gegenüber der linken Regalseite (46) erfolgt, indem das Flurförderzeug (10) in einem definierten Abstand zu der linken Regalseite (46) positioniert wird und/oder dass das Ausrichten des Flurförderzeugs (10) in der vorbestimmten Seitenorientierung gegenüber der rechten Regalseite (48) erfolgt, indem das Flurförderzeug (10) in einem definierten Abstand zu der rechten Regalseite (48) positioniert wird.

4. Verfahren nach einem der vorhergehenden Ansprüche, **gekennzeichnet durch** Ausrichten des Flurförderzeugs (10) an einem in Antriebsrichtung (AR) auf der linken Seite des Flurförderzeugs (10) befindlichen Objekt (46), wenn der Abstand (Y_{B}) der bestimmten relativen Position der Bedienperson (P) zu einer fahrzeugfesten Bezugsachse (40) einen vorbestimmten ersten Abstandswert (Y₁) überschreitet und Ausrichten des Flurförderzeugs (10) an einem in Antriebsrichtung (AR) auf der rechten Seite des Flurförderzeugs (10) befindlichen Objekt (48), wenn der Abstand (Y_{B}) der bestimmten relativen Position der Bedienperson (P) zu der fahrzeugfesten Bezugsachse (40) einen vorbestimmten zweiten Abstandswert (Y₂) überschreitet.

5. Verfahren nach Anspruch 4, **gekennzeichnet durch** Bewegen des Flurförderzeugs (10) in Antriebsrichtung (AR) ohne eine Seitenorientierung, wenn der Abstand (Y_{B}) der bestimmten relativen Position der Bedienperson (P) zu der fahrzeugfesten Bezugsachse (40) zwischen dem ersten Abstandswert (Y₁) und dem zweiten Abstandswert (Y₂) liegt.

6. Verfahren nach einem der Ansprüche 1 bis 5, wobei die relative Position der Bedienperson (P, 30) gegenüber dem Flurförderzeug (10) durch mindestens einen Laserscanner, mindestens eine 3D-Kamera und/oder durch eine Funkortung (22a, 22b, 22c) bestimmt wird.

7. Verfahren nach einem der Ansprüche 1 bis 8, **gekennzeichnet durch** die folgenden Schritte zur Bestimmung der relativen Position der Bedienperson gegenüber dem Flurförderzeug:
- Aussenden von Suchsignalen (S) durch mindestens drei Sende- und Empfangseinheiten (22a, 22b, 22c) des Flurförderzeugs (10),
- Empfang und Verarbeitung der Suchsignale (S) durch eine Funkfernbedienung (30),
- Aussenden von zu den Suchsignalen (S) korrespondierenden Antwortsignalen (A) durch die Funkfernbedienung (30),
- Ermitteln von Signallaufzeiten der ausgesandten Suchsignale (S) und der empfangenen, korrespondierenden Antwortsignale (A) durch eine Auswerteeinheit (24) des Flurförderzeugs (10),
- Bestimmen der relativen Position einer die Funkfernbedienung (30) tragenden Bedienperson (P) durch Bestimmung der relativen Position der Funkfernbedienung (30) gegenüber dem Flurförderzeug (10).

8. System aus einem Flurförderzeug und einem Warenlager, wobei
- Eine Ortungseinheit (22a, 22b, 22c) des Flurförderzeugs (10) dazu ausgebildet ist, eine relative Position der Bedienperson (P) gegenüber dem Flurförderzeug zu bestimmen,
- Eine Steuereinheit (24) dazu ausgebildet ist, das Flurförderzeug (10) gegenüber einem in Antriebsrichtung (AR) auf der linken Seite des Flurförderzeugs (10) befindlichen Objekt (46) in einer vorbestimmten Seitenorientierung auszurichten, wenn die bestimmte relative Position der Bedienperson (P) auf der linken Seite des Flurförderzeugs (10) liegt und das Flurförderzeug (10) gegenüber einem in Antriebsrichtung (AR) auf der rechten Seite des Flurförderzeugs (10) befindlichen Objekt (48) in einer vorbestimmten Seitenorientierung auszurichten, wenn die bestimmte relative Position der Bedienperson (P) auf der rechten Seite des Flurförderzeugs (10) liegt.

9. System nach Anspruch 8, **dadurch gekennzeichnet, dass** die Objekte Regalseiten (46, 48) eines Regals (52) eines Warenlagers sind.

10. System nach Anspruch 9, **dadurch gekennzeichnet, dass** die Steuereinheit (24) dazu ausgebildet ist, das Flurförderzeug (10) in der vorbestimmten Seitenorientierung gegenüber der linken Regalseite (46) auszurichten, indem die Steuereinheit (24) das Flurförderzeug (10) in einem definierten Abstand zu der linken Regalseite (46) positioniert und dass die Steuereinheit (24) ausgebildet ist, das Flurförderzeug (10) in der vorbestimmten Seitenorientierung gegenüber der rechten Regalseite (48) auszurichten, indem die Steuereinheit (24) das Flurförderzeug (10) in einem definierten Abstand zu der rechten Regalseite (48) positioniert.

11. System nach einem der Ansprüche 8 bis 10, **dadurch gekennzeichnet, dass** die Steuereinheit (24) dazu ausgebildet ist, das Flurförderzeug (10) an einem in Antriebsrichtung (AR) auf der linken Seite des Flurförderzeugs (10) befindlichen Objekt (46) auszurichten, wenn der Abstand (Y_{B}) der bestimmten relativen Position der Bedienperson (P, 30) zu einer fahrzeugfesten Bezugsachse (40) einen vorbestimmten ersten Abstandswert (Y₁) überschreitet und das Flurförderzeug (10) an einem in Antriebsrichtung (AR) auf der rechten Seite des Flurförderzeugs (10) befindlichen Objekt (48) auszurichten, wenn der Abstand (Y_{B}) der bestimmten relativen Position der Bedienperson (P, 30) zu der fahrzeugfesten Bezugsachse (40) einen vorbestimmten zweiten Abstandswert (Y₂) überschreitet.

12. System nach Anspruch 11, **dadurch gekennzeichnet, dass** die Steuereinheit (24) dazu ausgebildet ist, das Flurförderzeug (10) in Antriebsrichtung (AR) ohne eine Seitenorientierung zu bewegen, wenn der Abstand (Y_{B}) der bestimmten relativen Position der Bedienperson (P, 30) zu der fahrzeugfesten Bezugsachse (40) zwischen dem ersten Abstandswert (Y₁) und dem zweiten Abstandswert (Y₂) liegt.

13. System nach einem der Ansprüche 8 bis 12, **dadurch gekennzeichnet, dass** die Ortungseinheit mindestens einen Laserscanner, mindestens eine 3D-Kamera und/oder mindestens eine Funkortungseinheit (22a, 22b, 22c) umfasst.

14. System nach einem der Ansprüche 8 bis 13, weiter umfassend eine Funkfernbedienung, wobei
- als Teil der Ortungseinheit mindestens drei Sende- und Empfangseinheiten (22a, 22b, 22c) in einer vorbestimmten räumlichen Anordnung zueinander an dem Flurförderzeug (10) angeordnet sind, die dazu ausgebildet sind, Suchsignale (S) auszusenden und Antwortsignale (A) zu empfangen,
- die Funkfernbedienung (30) dazu ausgebildet ist, die von den Sende- und Empfangseinheiten (22a, 22b, 22c) ausgesandten Suchsignale (S) zu empfangen, zu verarbeiten und korrespondierende Antwortsignale (A) auszusenden,
- als Teil der Ortungseinheit eine Auswerteeinheit (24) vorgesehen ist, die dazu ausgebildet ist, Signallaufzeiten der ausgesandten Suchsignale (S) und der empfangenen, korrespondierenden Antwortsignale (A) zu ermitteln und aus mindestens drei der ermittelten Signallaufzeiten eine Position der Funkfernbedienung (30) und somit die Position einer die Funkfernbedienung (30) tragenden Bedienperson (P) relativ zu dem Flurförderzeug (10) zu bestimmen.

## Claims

1. Method for automatically aligning an industrial truck in a warehouse comprising the steps:
- determining a relative position of an operator (P) relative to an industrial truck (10) by means of a locating unit (22a, 22b, 22c) of the industrial truck (10),
- aligning the industrial truck (10) in a predetermined lateral orientation relative to an object (46) located on the left side of the industrial truck (10) as seen with respect to the driving direction of the industrial truck (10) when the determined relative position of the operator (P) is on the left side of the industrial truck (10), and
- aligning the industrial truck (10) in a predetermined lateral orientation relative to an object (48) located on the right side of the industrial truck (10) as seen with respect to the driving direction (AR) of the industrial truck (10) when the determined relative position of the operator (P) is on the right side of the industrial truck (10).

2. Method according to claim 1, **characterized in that** the objects are shelf sides (46, 48) of a shelf aisle (52) of the warehouse.

3. Method according to claim 2, **characterized in that** the industrial truck (10) is aligned in the predetermined side orientation relative to the left shelf side (46) by the industrial truck (10) being positioned at a defined distance from the left shelf side (46) and/or **in that** the industrial truck (10) is aligned in the predetermined side orientation relative to the right shelf side (48) by the industrial truck (10) being positioned at a defined distance from the right shelf side (48).

4. Method according to one of the preceding claims, **characterized by** aligning the industrial truck (10) with an object (46) located on the left side of the industrial truck (10) in the driving direction (AR), when the distance (YB) of the determined relative position of the operator (P) to a vehicle fixed reference axis (40) exceeds a predetermined first distance value (Y1), and aligning the industrial truck (10) with an object (48) located on the right-hand side of the industrial truck (10) in the driving direction (AR) when the distance (YB) of the determined relative position of the operator (P) to the vehicle fixed reference axis (40) exceeds a predetermined second distance value (Y2).

5. Method according to claim 4, **characterized by** moving the industrial truck (10) in the drive direction (AR) without a lateral orientation if the distance (YB) of the determined relative position of the operator (P) to the vehicle fixed reference axis (40) lies between the first distance value (Y1) and the second distance value (Y2).

6. Method according to one of claims 1 to 5, wherein the relative position of the operator (P, 30) with respect to the industrial truck (10) is determined by means of at least one laser scanner, at least one 3D camera and/or by radio location (22a, 22b, 22c).

7. Method according to any of claims 1 to 8, **characterized by** the following steps for determining the relative position of the operator with respect to the industrial truck:
- transmission search signals (S) by at least three transmitting and receiving units (22a, 22b, 22c) of the industrial truck (10),
- reception and processing of the search signals (S) by a radio remote control (30),
- transmitting response signals (A) corresponding to the search signals (S) by the radio remote control (30),
- determining signal transit times of the transmitted search signals (S) and the received corresponding response signals (A) by an evaluation unit (24) of the industrial truck (10),
- determining the relative position of an operator (P) carrying the radio remote control (30) by determining the relative position of the radio remote control (30) relative to the industrial truck (10).

8. System comprising an industrial truck and a warehouse, wherein
- a locating unit (22a, 22b, 22c) of the industrial truck (10) is adapted to determine a relative position of the operator (P) with respect to the industrial truck,
- a control unit (24) is adapted to align the industrial truck (10) in a predetermined lateral orientation with respect to an object (46) located in the driving direction (AR) on the left side of the industrial truck (10), when the determined relative position of the operator (P) is on the left side of the industrial truck (10) and aligning the industrial truck (10) with respect to an object (48) located in the driving direction (AR) on the right side of the industrial truck (10) in a predetermined lateral orientation when the determined relative position of the operator (P) is on the right side of the industrial truck (10).

9. System according to claim 8, **characterized in that** the objects are shelf sides (46, 48) of a shelf (52) of a warehouse.

10. System according to claim 9, **characterized in that** the control unit (24) is designed to align the industrial truck (10) in the predetermined side orientation with respect to the left shelf side (46), by the control unit (24) positioning the industrial truck (10) at a defined distance from the left shelf side (46), and **in that** the control unit (24) is designed to align the industrial truck (10) in the predetermined side orientation with respect to the right shelf side (48), by the control unit (24) positioning the industrial truck (10) at a defined distance from the right shelf side (48).

11. System according to any of claims 8 to 10, **characterized in that** the control unit (24) is designed to align the industrial truck (10) with an object (46) located in the driving direction (AR) on the left side of the industrial truck (10) when the distance (YB) of the determined relative position of the operator (P, 30) exceeds a predetermined first distance value (Y1) with respect to a reference axis (40) fixed to the vehicle and to align the industrial truck (10) with an object (48) located on the right-hand side of the industrial truck (10) in the driving direction (AR) when the distance (YB) of the determined relative position of the operator (P, 30) with respect to the vehicle fixed reference axis (40) exceeds a predetermined second distance value (Y2).

12. System according to claim 11, **characterized in that** the control unit (24) is designed to move the industrial truck (10) in the drive direction (AR) without a lateral orientation when the distance (YB) of the determined relative position of the operator (P, 30) to the vehicle fixed reference axis (40) lies between the first distance value (Y1) and the second distance value (Y2).

13. System according to one of claims 8 to 12, **characterized in that** the locating unit comprises at least one laser scanner, at least one 3D camera and/or at least one radio locating unit (22a, 22b, 22c).

14. System according to any of claims 8 to 13 further comprising a radio remote control, where
- at least three transmitting and receiving units (22a, 22b, 22c) are arranged on the industrial truck (10) as part of the locating unit in a predetermined spatial arrangement relative to one another, which transmitting and receiving units are designed to transmit search signals (S) and receive response signals (A),
- the radio remote control (30) is adapted to receive and process the search signals (S) transmitted by the transmitting and receiving units (22a, 22b, 22c) and to transmit corresponding response signals (A),
- an evaluation unit (24) is provided as part of the locating unit, which evaluation unit is designed to determine signal transit times of the transmitted search signals (S) and of the received, corresponding response signals (A) and to determine from at least three of the determined signal transit times a position of the radio remote control (30) and thus the position of an operator (P) carrying the radio remote control (30) relative to the industrial truck (10).

## Revendications

1. Procédé d'alignement automatique d'un chariot de manutention dans un entrepôt présentant les étapes suivantes :
- la détermination d'une position relative d'un opérateur (P) par rapport à un chariot de manutention (10) moyennant une unité de localisation (22a, 22b, 22c) du chariot de manutention (10),
- l'alignement du chariot de manutention (10) dans une orientation latérale prédéterminée par rapport à un objet (46) se trouvant sur le côté gauche du chariot de manutention (10) dans le sens d'entraînement du chariot de manutention (10), lorsque la position relative déterminée de l'opérateur (P) se situe sur le côté gauche du chariot de manutention (10), et
- l'alignement du chariot de manutention (10) dans une orientation latérale prédéterminée par rapport à un objet (48) se trouvant sur le côté droit du chariot de manutention (10) dans le sens d'entraînement (AR) du chariot de manutention (10), lorsque la position relative déterminée de l'opérateur (P) se situe sur le côté droit du chariot de manutention (10).

2. Procédé selon la revendication 1, **caractérisé en ce que** les objets sont les côtés de rayonnage (46, 48) d'un couloir de rayonnage (52) de l'entrepôt.

3. Procédé selon la revendication 2, **caractérisé en ce que** l'alignement du chariot de manutention (10) s'effectue dans une orientation latérale prédéterminée par rapport au côté gauche de rayonnage (46), tandis que le chariot de manutention (10) est positionné à une distance définie du côté gauche de rayonnage (46) et/ou l'alignement du chariot de manutention (10) s'effectue dans l'orientation latérale prédéterminée par rapport au côté droit de rayonnage (48), tandis que le chariot de manutention (10) est positionné à une distance définie du côté droit de rayonnage (48).

4. Procédé selon l'une des revendications précédentes, **caractérisé par** l'alignement du chariot de manutention (10) au niveau d'un objet (46) se trouvant sur le côté gauche du chariot de manutention (10) dans le sens d'entraînement (AR), lorsque la distance (Y_{B}) de la position relative déterminée de l'opérateur (P) par rapport à un axe de référence (40) solidaire du véhicule dépasse une première valeur de distance prédéterminée (Y₁) et l'alignement du chariot de manutention (10) au niveau d'un objet (48) se trouvant sur le côté droit du chariot de manutention (10) dans le sens d'entraînement (AR), lorsque la distance (Y_{B}) de la position relative déterminée de l'opérateur (P) par rapport à l'axe de référence (40) solidaire du véhicule dépasse une seconde valeur de distance prédéterminée (Y₂).

5. Procédé selon la revendication 4, **caractérisé par** le déplacement du chariot de manutention (10) dans le sens d'entraînement (AR) sans aucune orientation latérale, lorsque la distance (Y_{B}) de la position relative déterminée de l'opérateur (P) par rapport à l'axe de référence (40) solidaire du véhicule se situe entre la première valeur de distance (Y₁) et la seconde valeur de distance (Y₂).

6. Procédé selon l'une des revendications 1 à 5, dans lequel la position relative de l'opérateur (P, 30) par rapport au chariot de manutention (10) est déterminée par au moins un scanneur laser, au moins une caméra 3D et/ou par radiolocalisation (22a, 22b, 22c).

7. Procédé selon l'une des revendications 1 à 8, **caractérisé par** les étapes suivantes servant à déterminer la position relative de l'opérateur par rapport au chariot de manutention :
- l'émission de signaux de recherche (S) par au moins trois unités émettrices-réceptrices (22a, 22b, 22c) du chariot de manutention (10),
- la réception et le traitement des signaux de recherche (S) par une radiotélécommande (30),
- l'émission de signaux de réponse (A) correspondant aux signaux de recherche (S) par la radiotélécommande (30),
- l'évaluation des temps de propagation des signaux de recherche (S) émis et des signaux de réponse (A) correspondants reçus par une unité d'analyse et de traitement (24) du chariot de manutention (10),
- la détermination de la position relative d'un opérateur (P) portant la radiotélécommande (30) moyennant la définition de la position relative de la radiotélécommande (30) par rapport au chariot de manutention (10).

8. Système comportant un chariot de manutention et un entrepôt, dans lequel
- une unité de localisation (22a, 22b, 22c) du chariot de manutention (10) est conçue de manière à déterminer une position relative de l'opérateur (P) par rapport au chariot de manutention,
- une unité de commande (24) est conçue de manière à aligner le chariot de manutention (10) dans une orientation latérale prédéterminée par rapport à un objet (46) se trouvant sur le côté gauche du chariot de manutention (10) dans le sens d'entraînement (AR), lorsque la position relative déterminée de l'opérateur (P) se situe sur le côté gauche du chariot de manutention (10) et à aligner le chariot de manutention (10) dans une orientation latérale prédéterminée par rapport à un objet (48) se trouvant sur le côté droit du chariot de manutention (10) dans le sens d'entraînement (AR), lorsque la position relative déterminée de l'opérateur (P) se situe sur le côté droit du chariot de manutention (10).

9. Système selon la revendication 8, **caractérisé en ce que** les objets sont les côtés de rayonnage (46, 48) d'un rayonnage (52) d'un entrepôt.

10. Système selon la revendication 9, **caractérisé en ce que** l'unité de commande (24) est conçue de manière à aligner le chariot de manutention (10) dans l'orientation latérale prédéterminée par rapport au côté gauche de rayonnage (46), tandis que l'unité de commande (24) positionne le chariot de manutention (10) à une distance définie du côté gauche de rayonnage (46) et que l'unité de commande (24) est conçue de manière à aligner le chariot de manutention (10) dans l'orientation latérale prédéterminée par rapport au côté droit de rayonnage (48), tandis que l'unité de commande (24) positionne le chariot de manutention (10) à une distance définie du côté droit de rayonnage (48).

11. Système selon l'une des revendications 8 à 10, **caractérisé en ce que** l'unité de commande (24) est conçue de manière à aligner le chariot de manutention (10) au niveau d'un objet (46) se trouvant sur le côté gauche du chariot de manutention (10) dans le sens d'entraînement (AR), lorsque la distance (Y_{B}) de la position relative déterminée de l'opérateur (P, 30) par rapport à un axe de référence (40) solidaire du véhicule dépasse une première valeur de distance prédéterminée (Y₁) et à aligner le chariot de manutention (10) au niveau d'un objet (48) se trouvant sur le côté droit du chariot de manutention (10) dans le sens d'entraînement (AR), lorsque la distance (Y_{B}) de la position relative déterminée de l'opérateur (P, 30) par rapport à l'axe de référence (40) solidaire du véhicule dépasse une seconde valeur de distance prédéterminée (Y₂).

12. Système selon la revendication 11, **caractérisé en ce que** l'unité de commande (24) est conçue de manière à déplacer le chariot de manutention (10) dans le sens d'entraînement (AR) sans aucune orientation latérale, lorsque la distance (Y_{B}) de la position relative déterminée de l'opérateur (P, 30) par rapport à l'axe de référence (40) solidaire du véhicule se situe entre la première valeur de distance (Y₁) et la seconde valeur de distance (Y₂).

13. Système selon l'une des revendications 8 à 12, **caractérisé en ce que** l'unité de localisation comprend au moins un scanneur laser, au moins une caméra 3D et/ou au moins une unité de radiolocalisation (22a, 22b, 22c).

14. Système selon l'une des revendications 8 à 13, comportant encore une radiotélécommande, dans lequel
- au moins trois unités émettrices-réceptrices (22a, 22b, 22c) faisant partie de l'unité de localisation sont disposées dans une configuration spatiale prédéterminée les unes par rapport aux autres sur le chariot de manutention (10), lesquelles sont conçues de manière à émettre des signaux de recherche (S) et à recevoir des signaux de réponse (A),
- la radiotélécommande (30) est conçue de manière à recevoir, puis traiter les signaux de recherche (S) émis par les unités émettrices-réceptrices (22a, 22b, 22c) et à émettre des signaux de réponse (A) correspondants,
- une unité d'analyse et de traitement (24) faisant partie de l'unité de localisation est prévue, laquelle est conçue de manière à évaluer les temps de propagation des signaux de recherche (S) émis et des signaux de réponse (A) correspondants reçus, puis à déterminer une position de la radiotélécommande (30) et ainsi la position d'un opérateur (P) portant la radiotélécommande (30) par rapport au chariot de manutention (10) à partir au moins de trois temps de propagation de signaux évalués.
